# EUROPEAN PATENT SPECIFICATION

(11) **EP 2 244 123 B1**
(45) Date of publication and mention of the grant of the patent: **03.07.2013**
(21) Application number: 10157749.2
(22) Date of filing: 25.03.2010
(51) Int. Cl.: G01N 21/89

(54) **Method and device for detecting shape of sheet roll**
Verfahren und Vorrichtung zur Erkennung der Form einer Bahnrolle
Procédé et dispositif pour détecter la forme d'un rouleau de feuilles

(30) Priority: 26.03.2009 KR 20090026146
(43) Date of publication of application: 27.10.2010
(73) Proprietor: Yujin Instec Co. Ltd., Seoul 153-777 (KR)
(72) Inventor: Lee, Chung-Ki, 135-090, Seoul (KR)
(74) Representative: Fleck, Hermann-Josef

(56) References cited:
- EP-A1- 1 568 634
- JP-A- 9 058 930
- JP-A- 2000 105 103
- US-A1- 2005 115 205
- US-A1- 2007 102 556

## Description

### BACKGROUND OF THE INVENTION

This application claims priority to Korean Patent Application No. 2008-00000, filed on June 00, 2008, in the Korean Intellectual Property Office.

### 1. Field of the Invention

The present invention relates to a method and device for detecting a shape of a sheet roll, and more specifically, to a method and device for detecting a shape of a sheet roll that can detect whether there are various defects as well as accurately and rapidly detect a kind of defects by analyzing image information obtained from a cylindrical side surface of a sheet roll around which a sheet composed of various materials, such as a rolled steel plate, a copper plate, or an aluminum plate, is wound in a form of a roll.

### 2. Description of the Related Art:

Various sheet materials, such as a copper sheet, an aluminum sheet, etc., mainly used in industries, as well as various steel plates provided as a raw material when manufacturing a frame for various industry products, such as vehicles, ships, and the like are provided by being wound in a form of a sheet roll for convenience of transportation, storage, handling, etc. Generally, the product in this form is called a sheet roll.

In US 2005/115205 A1 a code applying device is shown which can efficiently manufacture an information recording paper roll. A tubular body holding section can rotate around an axis. A CCD-array is positioned on a base side of the cylindrical sheet roll sliding along the base side surface.

US 2007/0102556 shows an apparatus for measuring a side wall characteristic of a wound roll. A distance measuring sensor is supported in a housing for movement along a predetermined line of measurement extending across a portion of the side wall for measuring the side wall characteristic.

In JP 2000 105103 A an eccentricity inspection device for rolled paper is shown. A camera is roughly faced to the center of a core of a roll of paper and the center of the core is found by taking the picture of the side face of the core.

In many processes, the sheet is generally wound in a shape of a circular sheet roll when winding the sheet. However, when the winding is unstable, the shape of the sheet roll is poor. For example, an oval type roll, a zigzag type roll, or a telescopic type roll may be wound.

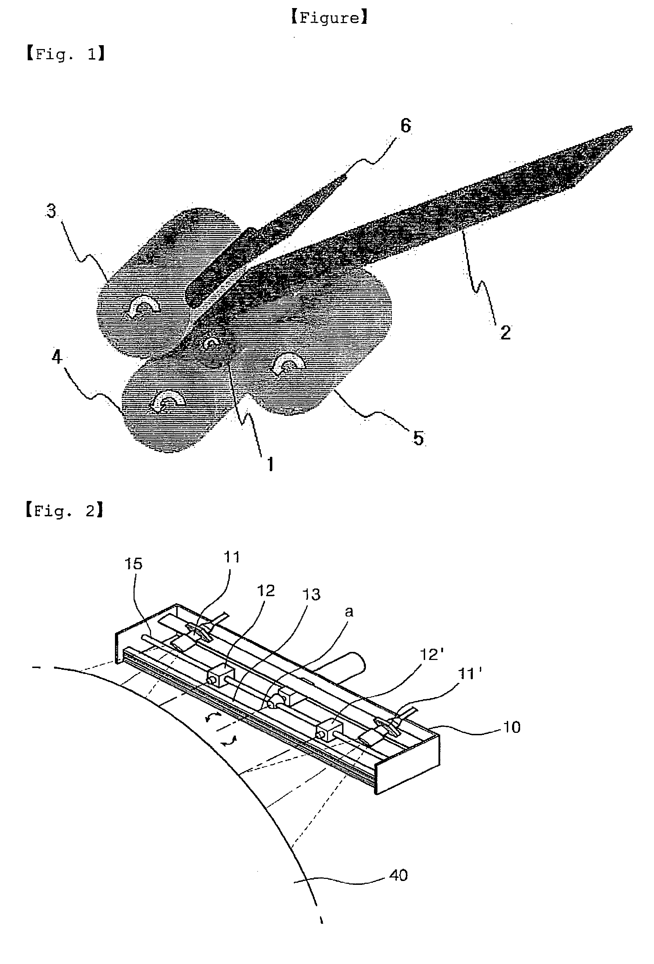

FIG. 1 shows a process of winding a steel sheet in a roll form when manufacturing a steel sheet or various thin sheets (hereinafter, a steel sheet will be described as an example) according to the related art. First, in the process of winding a steel sheet, when a steel sheet 2 is guided onto a mandrel 1 that provides a rotational shaft, the front end of the steel sheet is guided into a lower portion of the mandrel 1 by a first guide roller 3 and a second guide roller 4 that are positioned at the rear side of the mandrel 1 and is wound along an outer circumferential surface of the mandrel 1 by a third guide roller 5. When the winding of the steel sheet is progressed, the overall diameter of the mandrel 1 is increased by a thickness of the wound steel sheet and the guide rollers 3, 4, and 5 are thus pushed in a direction away from the mandrel 1. If the process of winding a steel sheet ends and the sheet roll is then removed, the overall diameter of the mandrel 1 is reduced and the mandrel 1 is retreated to the original position, such that the contact state with the guide rollers is released. When the steel sheet 2 is moved, it is guided by a guide plate 6 that is arranged on an upper portion of the mandrel 1.

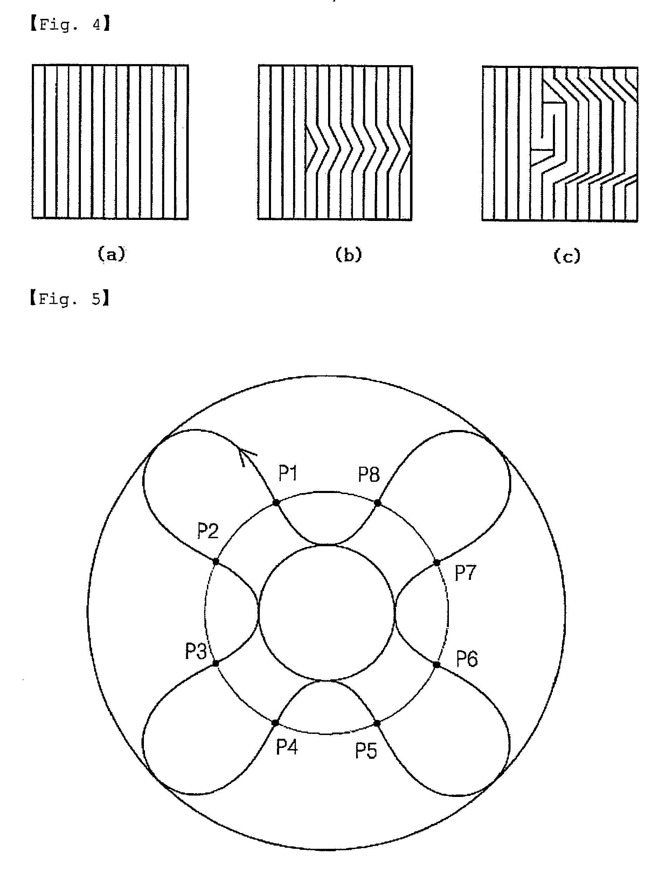

In the winding method according to the related art, when a sliding contact is larger than a rolling contact in the process of winding a steel sheet and a roller device by a direct contact, the wound interval is not uniform or the roller is wound while moving forward or backward as shown in FIG. 4. Thereby, there occurs a defect in the shape of the wound roll. As a result, the steel sheet is wound in a shape of an oval type roll, a zigzag type roll, or a telescopic type roll.

In particular, in the process of initially winding a steel sheet, when an inner diameter of a steel sheet does not form a true circle by the speed difference and sliding of the roller and the mandrel that is a winding bar, the shape of the sheet roll may form an oval. Further, when the steel sheet is continuously wound in a state inclined to one side, it may be wound in a telescopic type roll or a zigzag type roll due to the inclination of the winding bar. The sheet roll in such a form does not have a normal winding shape and it is very difficult for the worker to notice the defect of the winding shape with the naked eye.

### SUMMARY OF THE INVENTION

Accordingly, it is an object of the present invention to provide a method for detecting a shape of a sheet roll that can detect whether there are various defects as well as accurately and rapidly detect a kind of defects by analyzing image information obtained from a sheet roll around which a sheet composed of various materials, such as a rolled steel plate, a copper plate, or an aluminum plate, is wound in a form of a roll.

Another object of the present invention is to provide a device for detecting a shape of a sheet roll that can detect whether there are various defects as well as accurately and rapidly detect a kind of defects by analyzing image information obtained from a sheet roll around which a sheet composed of various materials, such as a rolled steel plate, a copper plate, or an aluminum plate, is wound in a form of a roll.

In order to accomplish the above object, the present invention provides a method according to claim 1.

In order to accomplish the above another object, the present invention provides a device according to claim 3.

Preferably, the camera is a line scan camera.

According to the present invention, it is possible to detect whether there are various defects as well as accurately and rapidly detect a kind of defects, which can occur in the winding process, by analyzing image information obtained from a winding shape of a sheet roll around which a steel sheet composed of various materials, such as a rolled steel plate, a copper plate, or an aluminum plate, is wound.

### BRIEF DESCRIPTION OF THE DRAWINGS

These and other objects, features, aspects, and advantages of the present invention will be more fully described in the following detailed description of preferred embodiments and examples, taken in conjunction with the accompanying drawings. In the drawings:
FIG. 1 is a diagram showing a conventional process of winding a sheet roll according to the related art;
FIG. 2 is a perspective view schematically showing a configuration of a photographing unit of a device for detecting a shape of a sheet roll according to one embodiment of the present invention;
FIG. 3 is a perspective view for explaining an operation of the device for detecting a shape of a sheet roll according to the present invention;
FIG. 4 is an exemplary diagram showing an image of a shape of a sheet roll photographed by the device for detecting a shape of a sheet roll according to the present invention;
FIG. 5 is a diagram showing a measuring point on a cylindrical side surface by a displacement sensor when rotating a support in the device for detecting a shape of a sheet roll according to the present invention; and
FIG. 6 is a schematic diagram showing an example of a surface state of a cylindrical side surface obtained by using the device for detecting a shape of a sheet roll according to the present invention.

### DETAILED DESCRIPTION OF THE INVENTION

Hereinafter, the present invention will be described in detail with reference to the accompanying drawings.

In the present invention, a 'cylindrical side surface' of a sheet roll means a circumferential surface that is formed of a thickness line of the sheet roll formed by winding the steel sheet.

The present invention provides a method for detecting a shape of a sheet roll comprising: positioning a camera on a cylindrical side surface of the sheet roll; photographing a cylindrical side surface while rotating the camera along the cylindrical side surface of a sheet roll; and determining whether there is a defect in a shape of a winding roll by analyzing a pattern of an image acquired by a photographing. The present invention also provides a device for detecting a shape of a sheet roll. FIG. 2 is a perspective view schematically showing a configuration of a photographing unit of a device for detecting a sheet roll according to one embodiment of the present invention.

The device for detecting a shape of a sheet roll according to the present invention includes a photographing unit including a support 10, cameras 11 and 11', displacement sensors 12 and 12', and a lighting device 13. The photographing unit acquires an image of a sheet roll by photographing the overall image while rotating the cylindrical side surface of a sheet roll 40 in the state where the photographing unit is disposed to be spaced at an adequate distance from the cylindrical side surface of the sheet roll 40.

Guide rails 15 are disposed at both sides inside the support 10 based on a rotational shaft 'a' and the displacement sensors 12 and 12' are movably mounted at the left and right of the guide rail 15, respectively. In other words, the displacement sensors 12 and 12' measure a distance from the cylindrical side surface by using a reflected signal while reciprocally moving left and right along the guide rail 15 in the state where each of the displacement sensors 12 and 12' is movably mounted at either side of the guide rail 15 disposed inside the support 10 in a length direction thereof. At this time, it is preferable that the displacement sensors 12 and 12' use a laser displacement sensor using triangulation.

The cameras 11 and 11' are each disposed at the inner portions adjacent to both ends of the support 10 and the lighting device 13 is disposed in a length direction parallel with the guide rail 15 of the support 10. Both ends of the guide rail 15 are fixed to the both inner sides of the support 10. It is preferable that a pair of cameras 11 and 11', which are disposed near both end portions of the support 10, uses a line scan camera that can perform the real time photographing in the circumferential direction of the sheet roll in a line unit.

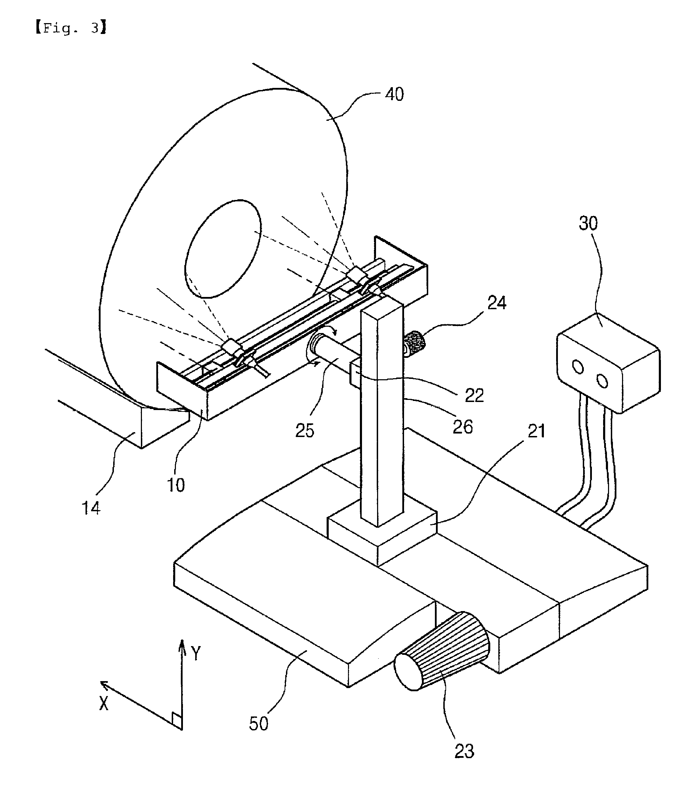

FIG. 3 is a perspective view for explaining the operation of the device for detecting a shape of a sheet roll according to the present invention.

The device for detecting a shape of a sheet roll according to the present invention includes the photographing unit described in FIG. 2, the support 10 on which the photographing unit is disposed, a horizontal moving member 21 that moves the support 10 in a horizontal direction (an x-axis direction), a vertical moving member 22 that moves the support 10 in a vertical direction (a y-axis direction), and a position controller 30 that controls a position by moving the horizontal moving member 21 and the vertical moving member 22 in a horizontal and vertical direction. The horizontal moving member 21 is movably mounted on a base 50 in a horizontal direction and the vertical moving member 22 is movably mounted on a frame 26 in a vertical direction. The frame 26 is vertically fixed on the horizontal moving member 21.

In order to move the support 10 in a horizontal and vertical direction, a first motor 23 and a second motor 24 are mounted on the base 50 and the frame 26, respectively. The support 10 can be moved in a horizontal direction (x-axis direction) by the horizontal moving member 21 operated by the first motor 23 and in a vertical direction (y-axis direction) by the vertical moving member 22 operated by the second motor 24. Although not shown in drawing, a detailed example of the horizontal moving member 21 and the vertical moving member 22 can configure by a mechanical means such as a rack & pinion, a chain, or a guide rail, or a combination thereof. As a more detailed example, a general LM (linear motion) guide structure can be exemplified. The control of the position and movement of the horizontal moving member 21 and the vertical moving member 22 is performed by the position controller 30 and the position controller 30 transfers a control signal to the first motor 23 and the second motor 24 to control the position and movement of these moving members 21 and 22.

Further, in order to rotate the support 10, a third motor 25 is mounted on the vertical moving member 22 and the support 10 is fixed to a motor shaft of the third motor 25. Therefore, the support 10 can be rotated around a side surface of the sheet roll 40 by the third motor 25 and the rotational angle of the support 10 can be controlled by the control signal transferred from the position controller 30 to the third motor 25.

The third motor 25 and the support 10 can be directly connected to each other as shown in FIG. 3. In some cases, although not shown in drawing, a deceleration device using a deceleration gear, etc. may be arranged between the third motor 25 and the support 10 to increase the operating force from the third motor 25. It is preferable that the third motor 25 uses a step motor that can accurately control the rotating position of the support 10.

Next, the operational process of the detection device of the present invention having the configuration as described above will be described in detail.

The sheet roll 40 is transferred on a conveyer in the state where it is put on a V block 14 and the sheet roll 40 stops at a point where the rotation central shaft of the support 10 of the detection device according to the present invention matches the central line of the V block. As a detailed example thereof, a probe is fixed on the central line of the V block and a position detecting sensor is installed at the lower center portion of the detection device of the present invention, thereby making it possible to stop the sheet roll at a point where the position detecting sensor detects the probe.

When the sheet roll 40 stops at the detection position, the support 10 is rotated in a vertical direction, that is, a y-axis direction with respect to a ground and the pair of displace sensors 12 and 12' disposed inside the support 10 receives the reflected signal while reciprocally moving in a direction opposite to each other on the guide rail 15. As a detailed example thereof, the rack gear (not shown) for moving the displacement sensors 12 and 12' is fixed on the upper surface of the guide rail 15 and the displacement sensors 12 and 12' can be configured of a pinion gear (not shown) engaging with the rack gear and a motor driving the pinion gear. When the pinion gear is rotated by the operation of the motor, the displacement sensors 12 and 12' can be moved left and right on the guide rail 15 while the rack gear is moved in a length direction of the support.

The central point of the sheet roll 40 can be obtained from a signal reflected when the displacement sensors 12 and 12' are moved in an upper direction of the cylindrical side surface of the sheet roll 40 and a signal obtained when they are moved in an upper direction of a hollow portion of the sheet roll 40. For example, when a reflected wave will be obtained at a position spaced by 'a' from the center of the signal of the displacement sensor that is positioned at the upper side and a reflected wave will be obtained at a position where the displacement signal positioned below is spaced by 'b' from the center, if b is larger than a, the position of the support 10 is moved downward by (b-a)/2. At this time, a calculation process for the position compensation can be performed by a data processing unit and the result value is transferred to the position controller 30. The position controller 30 transfers the control signal to the second motor 24 and the support 10 is moved by the vertical moving member 22 that is operated by the second motor 24.

After the rotational center of the support 10 moves to the central point of the sheet roll 40, the horizontal moving member 21 operated according to the control signal of the position controller 30 moves the support 10 to maintain the adequate distance between the sheet roll 40 and the cameras 11 and 11'

When the cameras 11 and 11' are positioned at an adequate place for photographing on the cylindrical side surface of the sheet roll 40, the support 10 is rotated by the operation of the third motor 25. At this time, when the cameras 11 and 11' are used at both sides of the support 10, the support 10 is rotated by 180°. Therefore, the pair of cameras 11 and 11' can photograph the overall cylindrical side surface by equally dividing the side surface of the sheet roll 40.

Although the embodiment of the present invention describes one example of a configuration where the support 10 is linear and the line scan cameras 11 and 11' are disposed at both sides of the support 10, the support 10 may be a form where each end is spaced by 120° or a cross form where each end is spaced by 90°. In order to acquire the overall image of the side surface of the sheet roll 40, the rotational angle of the support 10 is sufficient at 120° in the case of the former case and the rotational angle is also sufficient at 90° in the latter case, making it possible to reduce time consumed in the detection.

Further, it is possible to dispose one camera at one side of the guide rail 15. In this case, when the support 10 is rotated by 360° by using one camera, it is possible to obtain an image for the area of the overall side surface of the sheet roll 40.

FIG. 4 is an exemplary diagram showing an image of a shape of a sheet roll photographed by the device for detecting a shape of a sheet roll according to the present invention. When the photographed image is a normal case, each strip line is continuously exhibited in a straight shape as shown in (a) of FIG. 4. On the other hand, as shown in (b) and (c) of FIG. 4, when there is a kink defect or a folded defect, an abnormal pattern, not a straight form, is exhibited.

In the present invention, the kind of defects to be detected may include a telescopic type defect, a kink type defect, an oval type defect, a folded type defect, etc.

The telescope type defect means a defect exhibiting a state where a winding position at the time of winding the sheet or the strip is inaccurate in a width direction and edge portions at both sides of the strip are thus non-uniformly wound, such as the edge portions come into or out of a side surface, etc. When this defect is photographed by the line scan camera, each of the lines in the acquired image are not exhibited in a parallel form are exhibited in a form of an irregular curved line. Therefore, whether the corresponding defect is the telescopic type defect or not can be determined from the difference between the line patterns in the data processor by using a general image processing process.

The kink type defect means a defect occurring due to a small amount of angle caused at the strip when winding the strip. When this defect is photographed by the line scan camera, an image where the line is bent at a point causing the angle is acquired. Therefore, whether the corresponding defect is the kink type defect or not can be determined from the difference between the line patterns where the specific portion is bent.

The oval type defect means a defect that the shape of the side surface exhibits in a distorted image by self weight, that is, an oval shape. When this defect is photographed by the line scan camera, the line has a pattern of a hemispherical type of curved line. Therefore, whether the corresponding defect is an oval type defect or not can be determined from the detection of the line pattern of a hemispherical type of curved line.

The folded type defect means a defect that when the folded phenomenon of the strip occurs at the middle portion in the winding process of the strip, the strip is continuously wound thereon. This defect may cut the strip when releasing the strip. When this defect is photographed by the line scan camera, an image having a portion where two lines are folded at a specific portion is acquired. Therefore, whether the corresponding defect is the folded type defect or not can be determined by the difference between the line patterns where the specific portion is folded.

Further, in the present invention, the pair of displacement sensors 12 and 12' reciprocally moves left and right on the guide rail 15, making it possible to measure a height of the side surface around which the sheet roll 40 is wound.

FIG. 5 is a diagram showing a measuring point on the cylindrical side surface by the displacement sensor when the support is rotated in the device for detecting a shape of a sheet roll according to the present invention.

As shown in FIG. 5, an information of distance from the displacement sensor to each measuring point can be obtained from the reflected signals. The distance information, for example, the distance from the signal acquired at P₁ to P₈ spaced by the same distance from the center of the sheet roll to the displacement sensor can be obtained. An average value of these values is obtained and the height on the cylindrical side surface can be calculated using this result. Therefore, the unevenness information of the overall cylindrical side surface can be obtained by obtaining the positional average value at all the points. The unevenness information of the cylindrical side surface can be simply obtained by calculating the signal values obtained from the displacement sensor through a predetermined calculation process in the data processor. The obtained result values can be displayed to a user in a predetermined form through the display device, databased, and stored in the storage device.

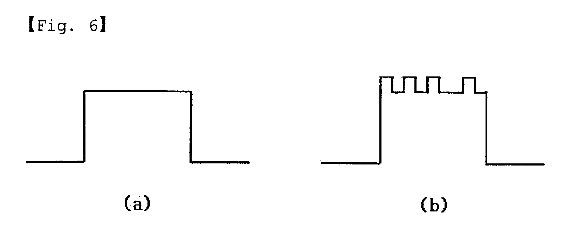

FIG. 6 is a schematic diagram showing an example of the surface state of the cylindrical side surface obtained by using the device for detecting a shape of a sheet roll according to the present invention.

When the steel sheet is normally wound, the flatness of the cylindrical side surface is large as shown in (a) of FIG. 6, but when there are various defects, including the telescopic detect, etc. in the winding process, the flatness of the cylindrical side surface is low as shown in (b) of FIG. 6, making it possible to easily detect whether there are the defects.

In the present invention, the data processing process of the image photographed by the cameras 11 and 11' and the signal obtained by the displacement sensor can be performed according to the known processing process in the data processor and therefore, is specifically not shown in the present invention. The image processing process can be performed using the following configuration.

First, the photographed image is transmitted to a grabber board and is converted into the digital signal. The grabber board can use any products among the currently marketed types or the modified types for some specific purposes. The grabber board is a grabber board in a form modified by the user in order to transfer the converted image digital signal to the image processor through the PCI bus, etc. The image processor searches whether there is a defect of the side surface of the sheet roll and calculates the result values by processing the image data, and then displays the search results on whether there are the defects in various forms on a screen through a convenient graphic user interface that allows the user to easily see the results.

As can be appreciated from the foregoing embodiments, the processing process of the signal input from the image or the displacement sensor can use any units such as software, hardware, or firmware that are already known to those skilled in the art. Also, the data processor can be realized by being physically divided into the image signal processor and the sensor signal processor and one physical means, for example, one board or chip can be processed according to a different data processing algorithm.

While the present invention has been described with reference to the preferred embodiments, it will be understood by those skilled in the related art that various modifications and variations may be made therein without departing from the scope of the present invention as defined by the appended claims.

## Claims

1. A method for detecting a shape of a sheet roll (40), comprising:
positioning at least two cameras (11, 11') on a cylindrical side surface of the sheet roll (40),
photographing a cylindrical side surface while rotating the at least two cameras (11, 11') along the cylindrical side surface of the sheet roll (40);
determining whether there is a defect in a shape of a winding roll by analyzing a pattern of an image acquired by photographing; and
further comprising measuring unevenness at all the positions of the cylindrical side surface by detecting the signal reflected from a displacement sensor (12, 12') reciprocally moving in a radial direction of the cylindrical side surface while rotating together with the at least two cameras (11, 11') on the cylindrical side surface of the sheet roll; **characterized in that** The at least two cameras (11, 11') are disposed to be symmetrical to each other based on a rotational shaft, which is the rotational center of the at least two cameras ; and
positioning the at least two cameras (11, 11') on the cylindrical side surface of the sheet roll (40) comprises:
positioning the rotational shaft on the horizontal axis center of the sheet roll (40); positioning the rotational shaft of the at least two cameras (11, 11') on the vertical axis center of the sheet roll (40); and moving the at least two cameras (11, 11') to the photographed position of the cylindrical side surface.

2. The method for detecting a shape of a sheet roll according to claim 1, wherein the camera (11, 11') is a line scan camera.

3. A device for detecting a shape of a cylindrical sheet roll (40) having a winding axis in a horizontal x-direction, comprising:
a rotatable support (10) having a rotational shaft (a);
a photographing unit having at least two cameras (11, 11') that are disposed on the support (10) to photograph a cylinder side surface which is a base surface of the cylindrical sheet roll (40);
a vertical moving unit that moves the support (10) in a vertical y-direction with respect to a ground and lying on a perpendicular plane to the winding axis along the cylinder side surface of the sheet roll (40) by an operation of a second motor (24);
a horizontal moving unit that moves the support (10) back and forth in the horizontal x-direction along the cylinder side surface of the sheet roll (40) by an operation of a first motor (23);
a third motor (25) that is disposed between the support (10) and the vertical moving unit in order to rotate the support (10) to be opposite to the base surface of the sheet roll (40) about the rotational shaft (a);
a position controller (30) that transfers a control signal to the first to third motors (23, 24, 25) to control the horizontal and vertical positions of the support (10) and rotate the support (10) at a predetermined angle:
a data processor that determines whether there is a defect in the shape of the winding roll (40) by analyzing the image pattern acquired from the cameras (11, 11'),
wherein the support (10) includes a guide rail (15) fixed to the both inner sides thereof;
**characterized in that** a pair of displacement sensors (12, 12') are disposed on the guide rail (40), each of the displacement sensors (12, 12') being disposed to reciprocally move along the guide rail (15) between a central point and the end portion of the guide rail (15) and
the support (10) has a symmetrical structure based on the rotational shaft (a) and each end of the support (10) is disposed with a camera (11, 11').

4. The device for detecting a shape of a sheet roll according to claim 3, wherein the camera (11, 11') is a line scan camera.

## Patentansprüche

1. Verfahren zur Erkennung der Form einer Bahnrolle (40), das aus den folgenden Schritten besteht:
- Positionieren der mindestens zwei Kameras (11, 11') auf einer zylindrischen Seitenfläche der mindestens zwei Kameras (11, 11');
- Photographieren einer zylindrischen Seitenfläche bei Rotation der mindestens zwei Kameras (11, 11') entlang der zylindrischen Seitenfläche der Bahnrolle (40);
- Bestimmen, durch Analyse eines Musters eines durch Photographie erhaltenen Bildes, ob ein Fehler in der Form einer Windungsrolle besteht; und
weiter daraus besteht, dass bei allen Positionen der zylindrischen Seitenfläche, etwaige Nichteinheitlichkeit durch Detektion des von einem sich in radialer Richtung zur zylindrischen Seitenfläche gegenseitig rotierenden Verschiebungssensor (12, 12') erhaltenen Signals gemessen wird, welcher Verschiebungssensor zusammen mit den mindestens zwei Kameras (11, 11') auf der zylindrischen Seitenfläche der mindestens zwei Kameras (11, 11') rotiert,
**dadurch gekennzeichnet,**
**dass** die mindestens zwei Kameras (11, 11') so angeordnet sind, dass sie aufgrund einer Rotationsachse, die das Rotationszentrum der mindestens zwei Kameras ist, symmetrisch miteinander sind; und
**dass** das Positionieren der mindestens zwei Kameras (11, 11') auf der zylindrischen Seitenfläche der Bahnrolle (40) aus folgenden Schritten besteht:
- Positionieren der Rotationsachse im horizontalen axialen Zentrum der Bahnrolle (40), Positionieren der Rotationsachse der mindestens zwei Kameras (11, 11') im vertikalen axialen Zentrum der Bahnrolle (40); und
- Bewegen der mindestens zwei Kameras (11, 11') zur photographierten Position der zylindrischen Seitenfläche.

2. Das Verfahren zur Erkennung der Form einer Bahnrolle nach Anspruch 1, wobei die Kamera (11, 11') eine Zeilenabtastkamera ist.

3. Vorrichtung zur Erkennung der Form einer zylindrischen Bahnrolle (40) mit einer Windungsachse in einer horizontaler x-Richtung, aus folgenden Elementen besteht:
- einem rotierbaren Träger (1) mit einer Rotationsachse (a);
- einer photographierenden, ganz auf dem Träger (10) angeordneten Einheit mit mindestens zwei Kameras (11, 11'), zum Photographieren einer zylindrischen Seitenfläche, die eine Bodenfläche der zylindrischen Bahnrolle (40) ist;
- einer sich vertikal bewegenden Einheit, die durch Betrieb eines zweiten Motors (24) den Träger (10) in einer dem Boden gegenüber vertikalen y-Richtung bewegt, und die auf einer zur Windungsachse rechtwinkligen Ebene, der zylindrischen Seitenfläche der Bahnrolle (40) entlang, liegt;
- einer sich horizontal bewegenden Einheit, die den Träger (10) durch Betrieb eines ersten Motors (23) hin und her in der horizontaler x-Richtung, der zylindrischen Seitenfläche der Bahnrolle (40) entlang, bewegt;
- einem dritten Motor (25), das zwischen dem Träger (10) und der sich vertikal bewegenden Einheit angeordnet ist, um den Träger (10) so um die Rotationsachse (a) zu rotieren, dass der Träger der Bodenfläche der Bahnrolle (40) gegenübersteht;
- einer Positionssteuereinheit (30), die ein Steuersignal von den ersten bis dritten Motoren (23, 24, 25) überträgt, um die horizontale und vertikale Positionen des Trägers (10) zu steuern und um den Träger um einen vorbestimmten Winkel zu rotieren;
- einem Datenprozessor, der durch Analyse des von den Kameras (11, 11') erhaltenen Bildmusters bestimmt, ob ein Fehler in der Form der Windungsrolle (40) besteht;
wobei der Träger (10) eine Führungsschiene (15), die an beiden Innenseiten des Trägers fixiert ist;
**dadurch gekennzeichnet,**
**dass** ein Paar Verschiebungssensoren (12, 12') auf der Führungsschiene (40) angeordnet sind, wobei jeder Verschiebungssensor (12, 12') so platziert ist, dass er sich der Führungsschiene (15) entlang zwischen einer zentralen Stelle und dem Endabschnitt der Führungsschiene (15) bewegt; und
**dass** der Träger (10) aufgrund der Rotationsachse (1) eine symmetrische Struktur besitzt, und jedes Ende des Trägers (10) mit einer Kamera (11, 11') angeordnet ist.

4. Die Vorrichtung zur Erkennung der Form einer zylindrischen Bahnrolle nach Anspruch 3, wobei die Kamera (11, 11') eine Zeilenabtastkamera ist.

## Revendications

1. Procédé de détection d'une forme d'un rouleau de feuilles (40), comprenant :
un positionnement d'au moins deux appareils de prise de vues (1, 11') sur une surface latérale cylindrique du rouleau de feuilles (40),
une prise de clichés d'une surface latérale cylindrique pendant la rotation des au moins deux appareils de prise de vues (11, 11') le long de la surface latérale cylindrique du rouleau de feuilles (40) ;
une détermination de l'éventuelle présence d'un défaut de forme d'un rouleau d'enroulement par analyse d'un motif d'une image acquise par une prise de clichés ; et
comprenant en outre une mesure d'irrégularité au niveau de toutes les positions de la surface latérale cylindrique par détection du signal réfléchi depuis un capteur de déplacement (12, 12') se déplaçant selon un mouvement de va-et-vient dans une direction radiale de la surface latérale cylindrique tout en effectuant une rotation avec les au moins deux appareils de prise de vues (11, 11') sur la surface latérale cylindrique du rouleau de feuilles ; **caractérisé en ce que**
les au moins deux appareils de prise de vues (11, 11') sont disposés de manière à être symétriques l'un de l'autre par rapport à un arbre de rotation, qui est le centre rotationnel des au moins deux appareils de prise de vues ; et
un positionnement des au moins deux appareils de prise de vues (11, 11') sur la surface latérale cylindrique du rouleau de feuilles (40) comprend :
un positionnement de l'arbre de rotation sur le centre axial horizontal du rouleau de feuilles (40) ; un positionnement de l'arbre de rotation des au moins deux appareils de prise de vues (11, 11') sur le centre axial vertical du rouleau de feuilles (40) ; et un déplacement des au moins deux appareils de prise de vues (11, 11') vers la position faisant l'objet de clichés de la surface latérale cylindrique.

2. Procédé de détection d'une forme d'un rouleau de feuilles selon la revendication 1, dans lequel l'appareil de prise de vues (11, 11') est un appareil de prise de vues à balayage linéaire.

3. Dispositif de détection d'une forme d'un rouleau de feuilles cylindrique (40) présentant un axe d'enroulement dans une direction x horizontale, comprenant :
un support pouvant être entraîné en rotation (10) comportant un arbre de rotation (a) ;
une unité de prise de clichés comportant au moins deux appareils de prise de vues (11, 11') qui sont disposés sur le support (10) pour prendre des clichés d'une surface latérale cylindrique qui est une surface de base du rouleau de feuilles cylindrique (40) ;
une unité de déplacement vertical qui déplace le support (10) dans une direction y verticale par rapport à un sol et reposant sur un plan perpendiculaire à l'axe d'enroulement le long de la surface latérale cylindrique du rouleau de feuilles (40) par une opération d'un deuxième moteur électrique (24) ;
une unité de déplacement horizontal qui déplace le support (10) vers l'arrière et vers l'avant dans la direction x horizontale le long de la surface latérale cylindrique du rouleau de feuilles (40) par une opération d'un premier moteur électrique (23) ;
un troisième moteur électrique qui est disposé entre le support (10) et l'unité de déplacement vertical de manière à entraîner le support (10) en rotation de manière à ce qu'il soit opposé à la surface de base du rouleau de feuilles (40) autour de l'arbre de rotation (a) ;
un dispositif de contrôle de position (30) qui transfère un signal de contrôle aux premier à troisième moteurs électriques (23, 24, 25) pour contrôler les positions horizontale et verticale du support (10) et entraîner le support (10) en rotation selon un angle prédéterminé ;
un processeur de données qui détermine l'éventuelle présence d'un défaut de forme du rouleau d'enroulement (40) par analyse du motif d'image acquis grâce aux appareils de prise de vues (11, 11'),
où le support (10) inclut un rail de guidage (15) fixé aux deux côtés internes de celui-ci ;
**caractérisé en ce qu'**une paire de capteurs de déplacement (12, 12') sont disposées sur le rail de guidage (40), chacun des capteurs de déplacement (12, 12') étant disposé pour se déplacer selon un mouvement de va-et-vient le long du rail de guidage (15) entre un point central et la partie d'extrémité du rail de guidage (15) et
le support (10) présente une structure symétrique par rapport à l'axe de rotation (a) et chaque extrémité du support (10) est dotée d'un appareil de prise de vues (11, 11').

4. Dispositif de détection d'une forme d'un rouleau de feuilles selon la revendication 3, dans lequel l'appareil de prise de vues (11, 11') est un appareil de prise de vues à balayage linéaire.
